# EUROPÄISCHE PATENTSCHRIFT

(11) **EP 3 792 150 B1**
(45) Veröffentlichungstag und Bekanntmachung des Hinweises auf die Patenterteilung: **15.06.2022**
(21) Anmeldenummer: 20189552.1
(22) Anmeldetag: 05.08.2020
(51) Int. Cl.: B62D 5/04, B62D 15/02, G08G 1/0965, B60W 40/08, G08G 1/01

(54) **ERKENNUNG VON HANDS-OFF-SITUATIONEN AUF BASIS VON SCHWARMDATEN**
DETECTION OF HANDS-OFF SITUATIONS BASED ON SWARM DATA
DÉTECTION DES SITUATIONS « HANDS-OFF » BASÉE SUR LES DONNÉES DE NUAGE

(30) Priorität: 11.09.2019 DE 102019213880
(43) Veröffentlichungstag der Anmeldung: 17.03.2021
(73) Patentinhaber: VOLKSWAGEN AG, 38440 Wolfsburg (DE)
(72) Erfinder: Eigel, Thomas, 13585 Berlin (DE); Stahl, Felix, 38106 Braunschweig (DE)

(56) Entgegenhaltungen:
- DE-A1-102011 109 711
- US-A1- 2013 297 204
- US-A1- 2019 092 346
- US-B1- 9 604 649

## Beschreibung

Die Erfindung betrifft ein Verfahren zur Erstellung von streckenbezogenen Kalibrierungsdaten gemäß dem Oberbegriff des Patentanspruchs 1, ein Verfahren zur Kalibrierung eines Fahrerassistenzsystems gemäß dem Oberbegriff des Patentanspruchs 5, ein Fahrerassistenzsystem gemäß dem Oberbegriff des Patentanspruchs 8, eine Recheneinrichtung gemäß dem Oberbegriff des Patentanspruchs 9 und ein Fahrzeug gemäß dem Oberbegriff des Patentanspruchs 10.

Auf dem technischen Gebiet der Fahrzeuge, insbesondere Kraftfahrzeuge, stellt die Überwachung der Lenkaktivität eines Fahrers eine bekannte Aufgabenstellung dar. Aus der Lenkaktivität können verschiedenste sicherheitstechnische Schlussfolgerungen gezogen werden. Einen besonders wichtigen Aspekt bildet dabei die Erkennung von Hands-off-Situationen, also Momenten, in denen der Fahrer seine Hände nicht am Lenkrad hat.

Bekannt ist dabei, beispielsweise Lenkmomentverläufe auszuwerten und analytisch auf Hinweise zu untersuchen, dass eine Hands-off-Situation vorliegt. Vereinfacht ausgedrückt, unterschreitet das Lenkmoment beispielsweise einen Grenzwert, kann dies als Anzeichen für eine Hands-off-Situation gewertet werden, da der Fahrer offenbar keine Gegenkraft mehr auf das Lenkrad ausübt, um die Einflüsse der Fahrbahn auf die Räder zu kompensieren. Allerdings sind solche Ansätze nur bedingt zuverlässig und genau.

Es ist auch bekannt, beispielsweise kapazitive Abstandssensoren zu verwenden, um die Hands-off-Situation direkt zu messen. Solche Lösungen sind hochgenau, jedoch auch mit großem technischen Aufwand verbunden.

Die US 9,604,649 B1 beschreibt beispielsweise ein Verfahren zur Überprüfung, ob ein Fahrer seine Hände am Lenkrad eines Fahrzeugs hat. Dazu wird ein Störsignal, beispielsweise ein Rütteln, am Lenkrad erzeugt und ein Lenkmoment gemessen.

In der DE 10 2008 042 277 A1 wird ein Verfahren beschrieben, in dem Lenkmomentverläufe mit einem Machine-Learning-Ansatz, beispielsweise einem neuronalen Netz, auf spezielle Eigenschaften untersucht werden, die auf eine Hand-am-Lenkrad- oder Hand-nicht-am-Lenkrad-Situation hinweisen.

Aus der US 2004/0039509 A1 ist ein System zur Kontrolle eines Insassenrückhaltesystems bekannt, das mit einem Machine-Learning-Ansatz arbeitet. Die US 2019/092346 A1 zeigt die Merkmale des Oberbegriffs des Anspruchs 5.

Der Erfindung liegt nun die Aufgabe zugrunde, ein verbessertes Verfahren zur Erkennung von Hands-off-Situationen zu schaffen, mit dem die Erkennungsgüte einer direkten Messung, wie beispielsweise mit einem kapazitiven Abstandssensor, auch bei Fahrerassistenzsystemen erreicht werden kann, die selbst eine geringere Erkennungsgüte haben, wie beispielsweise bei einer indirekten Messung durch Messung von Lenkmomentverläufen.

Die Aufgabe wird durch die Gegenstände der unabhängigen Patentansprüche 1, 5, 8, 9 und 10 gelöst. Weitere bevorzugte Ausgestaltungen der Erfindung ergeben sich aus den übrigen, in den Unteransprüchen genannten Merkmalen.

Gemäß eines ersten Aspekts wird ein erfindungsgemäßes Verfahren zur Erstellung von streckenbezogenen Kalibrierungsdaten für ein Fahrerassistenzsystem, das zur Erkennung von Hands-off-Situationen in einem Fahrzeug ausgebildet ist, bereitgestellt, umfassend folgende Schritte:
- Erkennung von Hands-off-Situationen durch Fahrzeuge entlang von Streckenabschnitten unter Verwendung von Fahrerassistenzsystemen mit einer ersten Erkennungsgüte;
- Erkennung von Hands-off-Situationen durch Fahrzeuge entlang derselben Streckenabschnitte unter Verwendung von Fahrerassistenzsystemen mit einer höheren Erkennungsgüte;
- Ermittlung von Streckenabschnitten, auf denen eine Differenz der Menge von durch die Fahrerassistenzsysteme mit der ersten Erkennungsgüte erkannten Hands-off-Situation und der Menge von durch die Fahrerassistenzsysteme mit der höheren Erkennungsgüte erkannten Hands-off-Situationen besteht; und daraus
- Erstellung der streckenbezogenen Kalibrierungsdaten unter Bildung von Zuverlässigkeitskenngrößen für die Erkennung mit der ersten Erkennungsgüte auf den jeweiligen Streckenabschnitten in Abhängigkeit der bestehenden Differenz.

Je größer die vorliegende Differenz ist, umso geringer ist die Zuverlässigkeitskenngröße ausgeprägt, mit anderen Worten ausgedrückt, umso unzuverlässiger ist die Erkennung von Hands-off-Situationen mit der ersten Erkennungsgüte auf den betreffenden Streckenabschnitten. Dies kann seine Ursache beispielsweise in der Streckenführung haben. Liegt rein exemplarisch ein langer, gerader und breiter Streckenabschnitt vor, kann ein Fahrer dazu neigen, seine Hände zur Entlastung nur noch leicht am unteren Rand des Lenkrads anzulegen und die bei sonst konzentrierter Fahrt auf engeren kurvenreichen Streckenabschnitten permanent erfolgenden leichten Korrekturbewegungen auf ein Minimum zu reduzieren. Eine Erkennung mit geringer Erkennungsgüte wird in solchen Situationen unzuverlässiger, da die vom Fahrer ausgehenden Signale schwächer werden.

Der Fachmann kann anhand der hierin offenbarten Lehre einen zweckmäßigen Grenzwert für die Zuverlässigkeitskenngröße festlegen, bei dessen Unterschreitung die Erkennung mit der ersten Erkennungsgüte mit Hinblick auf die Vermeidung von Fehlwarnungen einerseits und die Verkehrssicherheit andererseits als nicht mehr zuverlässig genug angesehen werden kann.

Die in dem erfindungsgemäßen Verfahren erstellten streckenbezogenen Kalibrierungsdaten geben somit darüber Aufschluss, ob und in welchem Maße das Fahrerassistenzsystem mit der ersten Erkennungsgüte anders kalibriert werden muss, um Fehlwarnungen zu vermeiden und zugleich eine ausreichende Sicherheit zu gewährleisten.

Vorzugsweise wird eine Vielzahl von Fahrzeugen verwendet, um die Erkennungen zum Vergleich der Ergebnisse mit geringerer und höherer Erkennungsgüte zu liefern. Dem Fachmann ist dies auch unter der Bezeichnung "Verwendung von Schwarmdaten" bekannt.

Die streckenbezogenen Kalibrierungsdaten können vorzugsweise unter Einbezug von elektronischem Kartenmaterial erstellt werden, in dem die Zuverlässigkeitskenngrößen den jeweiligen Streckenabschnitten in der Karte zugeordnet werden.

Bei der Erkennung von Hands-off-Situationen wird vorzugsweise auch die Verkehrslage berücksichtigt und der Vergleich der Anzahl erkannter Hands-off-Situationen auf die Zeit bezogen, die das Fahrzeug zum Passieren des Streckenabschnitts benötigt hat. Somit ergibt sich eine Anzahl erkannter Hands-off-Situationen über den Streckenabschnitt pro Zeiteinheit.

In bevorzugter Ausgestaltung des Verfahrens der Erfindung ist vorgesehen, dass Fahrzeuge verwendet werden, deren Fahrerassistenzsysteme sowohl die Erkennung mit der ersten Erkennungsgüte als auch die Erkennung mit der höheren Erkennungsgüte simultan durchführen.

Die erstellten streckenbezogenen Kalibrierungsdaten weisen somit eine besonders hohe Validität auf, da ein direkter Vergleich der beiden Erkennungsgüten in Bezug auf dasselbe Fahrzeug möglich ist und Fehlwarnungen bei geringer Erkennungsgüte so besonders genau erkannt werden.

Alternativ kann auch vorgesehen sein, dass die jeweiligen Fahrzeuge von ihren Fahrerassistenzsystemen mit unterschiedlichen Erkennungsgüten erkannte Hands-off-Situationen und die zugehörigen Streckenabschnitte vorzugsweise drahtlos an eine gegebenenfalls in einiger Entfernung lokalisierte zentrale Recheneinrichtung übermitteln, die dann die Ermittlung der Streckenabschnitte mit Vorliegen einer Differenz sowie die Erstellung der streckenbezogenen Kalibrierungsdaten durchführt.

Dies reduziert den technischen Aufwand in den Fahrzeugen signifikant und ermöglicht höhere Rechenleistungen bei der Erstellung der Kalibrierungsdaten.

In weiterer bevorzugter Ausgestaltung des Verfahrens der Erfindung ist vorgesehen, dass im Fall der ersten Erkennungsgüte die Hands-off-Situationen durch Auswertung von Lenkmomentdaten erkannt werden und im Fall der höheren Erkennungsgüte die Hands-off-Situationen durch Auswertung von Messdaten eines kapazitiven Lenkradsensors erkannt werden.

Kapazitive Lenkradsensoren messen den Abstand der Hände zum Lenkrad direkt und stellen damit eine hochgenaue Messung dar. Diese bieten daher eine besonders gute Referenz für die deutlich ungenauere Auswertung von Lenkmomentverläufen.

In weiterer bevorzugter Ausgestaltung des Verfahrens der Erfindung ist vorgesehen, dass die hergestellten streckenbezogenen Kalibrierungsdaten durch die Fahrzeuge oder eine zentrale Recheneinrichtung an andere Fahrzeuge übermittelt werden.

Insbesondere erfolgt eine Übermittlung an andere Fahrzeuge, die selbst kein Fahrerassistenzsystem umfassen, das mit der höheren Erkennungsgüte Hands-off-Situationen erkennen kann.

Ein weiterer Aspekt der Erfindung betrifft ein Verfahren zur Kalibrierung eines Fahrerassistenzsystems, das zur Erkennung von Hands-off-Situationen in einem Fahrzeug ausgebildet ist, umfassend folgende Schritte:
- Erfassung von Positionsdaten des Fahrzeugs, während sich das Fahrzeug entlang von Streckenabschnitten bewegt; und dabei
- Erkennung von Hands-off-Situationen durch das Fahrerassistenzsystem mit einer ersten Erkennungsgüte.

Erfindungsgemäß ist vorgesehen, dass das Fahrzeug streckenbezogene Kalibrierungsdaten, hergestellt oder herstellbar in einem erfindungsgemäßen Verfahren gemäß der vorhergehenden Beschreibung, empfängt und das Fahrerassistenzsystem die Kalibrierungsdaten wie folgt verwendet:
- Extraktion von Zuverlässigkeitskenngrößen aus den Kalibrierungsdaten zu jenen Streckenabschnitten, auf denen das Fahrerassistenzsystem Hands-off-Situationen erkannt hat; und
- Anpassung der Erkennungssensitivität des Fahrerassistenzsystems für die jeweiligen Streckenabschnitte in Abhängigkeit der Ausprägung der Zuverlässigkeitskenngröße, wenn diese einen Grenzwert unterschreitet.

Dadurch, dass das Fahrzeug mit der ersten Erkennungsgüte auf Basis der Erkennungen der Fahrzeuge mit der höheren Erkennungsgüte als Referenz sein Fahrerassistenz bedarfsgerecht konfigurieren kann, lässt sich dessen Erkennungsgüte deutlich steigern, ohne dass kostenintensivere Messtechnik mit höherer Erkennungsgüte verbaut werden muss.

Grundsätzlich kann die Erkennungssensitivität erhöht oder vermindert werden. In der Regel wird jedoch davon auszugehen sein, dass die Erkennungssensitivität aufgrund von fehlerhaften positiven Erkennungen vermindert werden muss, als dass sie aufgrund von fehlerhaften Nicht-Erkennungen erhöht werden muss.

Das Fahrzeug kann die streckenbezogenen Kalibrierungsdaten bevorzugt drahtlos von anderen Fahrzeugen oder von einer zentralen Recheneinrichtung empfangen.

In Anknüpfung an die vorangegangene Beschreibung ist in bevorzugter Ausgestaltung des Verfahrens der Erfindung vorgesehen, dass das Fahrerassistenzsystem des Fahrzeugs die Hands-off-Situationen durch Auswertung von Lenkmomentdaten erkennt.

Diese Auswertung wird, bevorzugt mit den Erkennungen auf Basis kapazitiver Lenkradsensoren, signifikant in ihrer Erkennungsgüte erhöht.

In weiterer bevorzugter Ausgestaltung des Verfahrens der Erfindung ist vorgesehen, dass die Erkennungssensitivität vermindert wird, indem Lenkmomentschwellwerte, bei denen eine Hands-off-Situation erkannt wird, herabgesetzt werden.

Die Hands-off-Situation wird somit erst dann erkannt, wenn die Signale des Fahrers deutlicher abnehmen, als vor der Herabsetzung der Lenkmomentschwellwerte.

Ein weiterer Aspekt der Erfindung betrifft ein Fahrerassistenzsystem, ausgebildet um als Fahrerassistenzsystem mit einer ersten Erkennungsgüte und/oder als Fahrerassistenzsystem mit einer höheren Erkennungsgüte in einem der erfindungsgemäßen Verfahren gemäß der vorhergehenden Beschreibung zu fungieren.

Das Fahrerassistenzsystem kann beispielsweise ausgebildet sein, im Fall einer vorliegenden Hands-off-Situation eine Warnung oder auch Notbremsung durchzuführen.

Zur Verminderung der Erkennungssensitivität kann hier beispielsweise ein Warnzeitpunkt oder Notbremszeitpunkt verzögert werden.

Ein weiterer Aspekt der Erfindung betrifft eine Recheneinrichtung, ausgebildet um in einem der erfindungsgemäßen Verfahren gemäß der vorhergehenden Beschreibung wenigstens eine Funktion aus folgender Gruppe zu übernehmen:
- Empfangen von Daten von Fahrzeugen und Verarbeitung der Daten zu streckenbezogenen Kalibrierungsdaten;
- Empfangen von streckenbezogenen Kalibrierungsdaten von Fahrzeugen und Vermittlung dieser an andere Fahrzeuge.

Ein weiterer Aspekt der Erfindung betrifft ein Fahrzeug, umfassend ein erfindungsgemäßes Fahrerassistenzsystem gemäß der vorhergehenden Beschreibung.

Nochmals mit anderen Worten zusammengefasst betrifft die Erfindung ein Verfahren, um die Hands-off-Erkennung in einem Fahrzeug mit lenkmomentbasierter Erkennung dadurch zu verbessern, dass Schwarmdaten von Fahrzeugen bereitgestellt werden, die Hands-off-Situationen mit Handabstandssensoren im Lenkrad erkennen. Über einen bestimmten Streckenabschnitt werden beide Erkennungsergebnisse verglichen und bei Abweichungen die Richtigkeit der Ergebnisse der Handabstandssensoren unterstellt. Auf dieser Basis werden Streckenabschnitte ermittelt, auf denen die lenkmomentbasierte Erkennung unzuverlässig ist. Auf Grundlage dieser Erkenntnis können Systeme mit Lenkmomentauswertung dann neu parametriert werden, um streckenbezogen zuverlässiger zu werden.

Die Erfindung wird nachfolgend in Ausführungsbeispielen anhand der zugehörigen Zeichnung erläutert. Es zeigt:

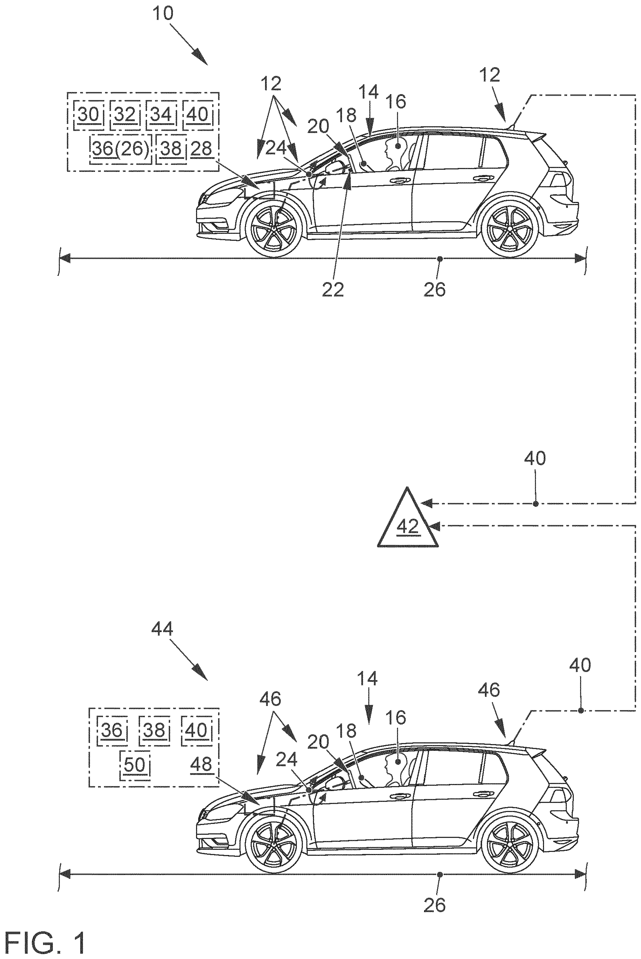

- Figur 1: ein erfindungsgemäßes Verfahren zur Erstellung von streckenbezogenen Kalibrierungsdaten und zur erfindungsgemäßen Kalibrierung eines Fahrerassistenzsystems mit den Kalibrierungsdaten.

Figur 1 zeigt im oberen Teil ein erfindungsgemäßes Fahrzeug 10. Das Fahrzeug 10 steht stellvertretend für eine Vielzahl solcher Fahrzeuge.

Das Fahrzeug 10 umfasst ein erfindungsgemäßes Fahrerassistenzsystem 12. Dieses ist dazu ausgebildet, während der Fahrt eine Erkennung von Hands-off-Situationen 14 durchzuführen, also Situationen, in denen ein Fahrer 16 seine Hände 18 nicht am Lenkrad 20 hat, wie im oberen Teil von Figur 1 exemplarisch gezeigt.

Das Fahrerassistenzsystem 12 umfasst zur Erkennung solcher Hands-off-Situationen 14 zwei unterschiedliche technische Systeme. Zum einen weist das Fahrerassistenzsystem 12 einen im Lenkrad 20 integrierten Lenkradsensor 22 auf, mit dem ein Entfernen der Hände 18 vom Lenkrad 20 direkt kapazitiv erkannt werden kann. Zum anderen weist das Fahrerassistenzsystem 12 einen Sensor zur Messung eines Lenkmoments 24 auf. Aus dem Lenkmoment 24 können ebenfalls Rückschlüsse auf das Vorliegen einer Hands-off-Situation 14 gezogen werden, da der Fahrer 16 in solchen Situationen keine Kraft auf das Lenkrad 20 ausübt.

Systembedingt ist die Erkennung einer Hands-off-Situation 14 über das Lenkmoment 24 mit einer geringeren Erkennungsgüte behaftet, im Folgenden bezeichnet als erste Erkennungsgüte, als die Erkennung mit dem Lenkradsensor 22, im Folgenden bezeichnet als höhere Erkennungsgüte.

In dem erfindungsgemäßen Verfahren fährt das Fahrzeug 10 entlang eines Streckenabschnitts 26, der hier prinziphaft dargestellt ist. Während das Fahrzeug 10 fährt, wird nach Hands-off-Situationen 14 sowohl über das Lenkmoment 24 als auch mit dem Lenkradsensor 22 gesucht. Der Sensor zur Erfassung des Lenkmoments 24 und der Lenkradsensor 22 sind dazu in diesem Beispiel mit einem Steuergerät 28 wirkverbunden, das hier exemplarisch zum Fahrerassistenzsystem 12 gehört.

In dem Steuergerät 28 laufen Lenkmomentdaten 30 und Messdaten 32 des Lenkradsensors 22 mit Positionsdaten 34 des Fahrzeugs 10 zusammen, so dass stets zugeordnet werden kann, welche Lenkmomentdaten 30 und welche Messdaten 32 des Lenkradsensors 22 an einem gemeinsamen Punkt entlang dem Streckenabschnitt 26 erfasst worden sind.

Das Steuergerät 28 ermittelt in diesem Fall rein exemplarisch eine Hands-off-Situation 14 aus den Messdaten 32 des Lenkradsensors 22 und rein exemplarisch fünf Hands-off-Situationen 14 aus den Lenkmomentdaten 30 entlang dem Streckenabschnitt 26.

Das Steuergerät 28 ermittelt daraus, dass über den Streckenabschnitt 26 eine Differenz 36 besteht, zwischen der Menge von Hands-off-Situationen 14, die mit der ersten Erkennungsgüte erkannt worden sind und der Menge von Hands-off-Situationen 14, die mit der höheren Erkennungsgüte erkannt worden sind. Die Differenz 36 beträgt in diesem Beispiel "vier".

Aus der Differenz 36 wird von dem Steuergerät 28 eine Zuverlässigkeitskenngröße 38 für die Erkennung mit der ersten Erkennungsgüte ermittelt, die abnimmt, wenn die Differenz 36 zunimmt.

Unter Einbezug der Zuverlässigkeitskenngrößen 38 erstellt das Steuergerät 28 nun streckenbezogene Kalibrierungsdaten 40, in denen die Zuverlässigkeitskenngrößen 38 informationstechnisch mit dem Streckenabschnitt 26 verbunden wird, beispielsweise über die Positionsdaten 34.

Die streckenbezogenen Kalibrierungsdaten 40 sagen damit aus, dass eine Erkennung von Hands-off-Situationen 14 aus Lenkmomentdaten 30 entlang dem Streckenabschnitt 26 relativ unzuverlässig ist. Als Maß für die Zuverlässigkeitskenngröße 38 kann beispielsweise die Differenz 36 oder auch eine prozentuale Größe verwendet werden. Als prozentuale Größe können beispielsweis die Erkennungen durch den Lenkradsensor 22 auf die Erkennungen aus den Lenkmomentdaten 30 bezogen werden, so dass sich hier exemplarisch eine prozentuale Größe von 1/5 beziehungsweise 0,2 oder 20 % ergibt. Nimmt diese prozentuale Größe ab, bedeutet das eine geringere Zuverlässigkeit der Erkennungen aus den Lenkmomentdaten 30. Der Fachmann kann anhand der hier beschriebenen Lehre festlegen, welcher Grenzwert zumindest erreicht werden muss, damit die Erkennungen aus den Lenkmomentdaten 30 noch als zuverlässig gilt. Dies können beispielsweis 90 %, 95 % oder mehr sein. Die streckenbezogenen Kalibrierungsdaten 40 liefern damit auch eine Aussage, wie unzuverlässig oder zuverlässig die Erkennungen aus den Lenkmomentdaten 30 sind und damit, wie stark ein Fahrerassistenzsystem 12, 46 (vergleiche auch unterer Teil von Figur 1), das auf Basis von Lenkmomentdaten 30 Hands-off-Situationen 14 erkennt, auf dem Streckenabschnitt 26 kalibriert werden muss.

Diese streckenbezogenen Kalibrierungsdaten 40 werden durch das Fahrzeug 10 in diesem Beispiel drahtlos an eine erfindungsgemäße zentrale Recheneinrichtung 42 übermittelt, die in der Figur 1 in etwa mittig illustriert ist. Dabei kann es sich beispielsweise um eine Mobilfunkstation handeln, die in größerer Entfernung lokalisiert sein kann.

Die Recheneinrichtung 42 übermittelt die streckenbezogenen Kalibrierungsdaten 40 in diesem Beispiel an ein anderes erfindungsgemäßes Fahrzeug 44. Das andere Fahrzeug 44 kann stellvertretend für eine Vielzahl solcher Fahrzeuge 44 stehen.

Das Fahrzeug 44 verfügt über ein erfindungsgemäßes Fahrerassistenzsystem 46. Dieses ist ebenfalls dazu ausgebildet, während der Fahrt eine Erkennung von Hands-off-Situationen 14 durchzuführen. Das Fahrerassistenzsystem 46 umfasst zur Erkennung der Hands-off-Situationen 14 hier aber nur einen Sensor zur Messung eines Lenkmoments 24 und ist dadurch deutlich kostengünstiger als das Fahrzeug 10.

Im Folgenden wird erläutert, wie im Rahmen eines erfindungsgemäßen Verfahrens das Fahrerassistenzsystem 46 zur Erkennung der Hands-off-Situationen 14 so kalibriert wird, dass es nahezu dieselbe höhere Erkennungsgüte erreicht, wie das Fahrerassistenzsystem 12 mit dem Lenkradsensor 22:
Das Fahrzeug 44 bewegt sich entlang desselben Streckenabschnitts 26, erfasst dabei seine Positionsdaten 34 und führt eine Erkennung von Hands-off-Situationen 14 mit dem Fahrerassistenzsystem 46 durch. Dabei erreicht es konventionell nur die erste Erkennungsgüte.

In dem erfindungsgemäßen Verfahren empfängt das Fahrzeug 44 nun die streckenbezogenen Kalibrierungsdaten 40, die in dem oben beschriebenen erfindungsgemäßen Verfahren hergestellt worden sind.

Das Fahrerassistenzsystem 46 verfügt exemplarisch über ein Steuergerät 48. Das Steuergerät 48 extrahiert aus den empfangenen streckenbezogenen Kalibrierungsdaten 40 die Zuverlässigkeitskenngröße 38 zu dem Streckenabschnitt 26.

Das Steuergerät 48 entnimmt der Zuverlässigkeitskenngröße 38 die Information, dass auf dem aktuellen Streckenabschnitt 26 die angewendete Erkennung auf Basis von Lenkmomentdaten 30 unzuverlässig ist und zwar in einer Größenordnung von vier fehlerhaften positiven Erkennungen einer Hands-off-Situation 14 über den Streckenabschnitt 26, entsprechend der Differenz 36.

Da die Zuverlässigkeitskenngröße 38 hier einen fachmännisch festgelegten Grenzwert unterschreitet, vermindert das Fahrerassistenzsystem 46 seine Erkennungssensitivität, solange der Streckenabschnitt 26 befahren wird. Die Quantifizierung der Verminderung wird auf Basis des Betrags der Differenz 36 fachmännisch zweckmäßig festgelegt.

Um die Erkennungssensitivität zu vermindern, wird hier exemplarisch ein neuer Lenkmomentschwellwert 50 aus dem Betrag der Differenz 36 bestimmt, der geringer ist, als ein ursprünglich eingestellter Lenkmomentschwellwert, und der unterschritten werden muss, damit eine Hands-off-Situation 14 erkannt wird. Rein exemplarisch kann der Lenkmomentschwellwert 50, entsprechend der Differenz 36, um 80 % abgesenkt werden.

### Bezugszeichenliste

- 10: Fahrzeug
- 12: Fahrerassistenzsystem
- 14: Hands-off-Situation
- 16: Fahrer
- 18: Hände
- 20: Lenkrad
- 22: Lenkradsensor
- 24: Lenkmoment
- 26: Streckenabschnitt
- 28: Steuergerät
- 30: Lenkmomentdaten
- 32: Messdaten
- 34: Positionsdaten
- 36: Differenz
- 38: Zuverlässigkeitskenngröße
- 40: Kalibrierungsdaten
- 42: Recheneinrichtung
- 44: Fahrzeug
- 46: Fahrerassistenzsystem
- 48: Steuergerät
- 50: Lenkmomentschwellwert

## Patentansprüche

1. Verfahren zur Erstellung von streckenbezogenen Kalibrierungsdaten (40) für ein Fahrerassistenzsystem (46), das zur Erkennung von Hands-off-Situationen (14) in einem Fahrzeug (44) ausgebildet ist, umfassend folgende Schritte:
- Erkennung von Hands-off-Situationen (14) durch Fahrzeuge (10) entlang von Streckenabschnitten (26) unter Verwendung von Fahrerassistenzsystemen (12) mit einer ersten Erkennungsgüte;
- Erkennung von Hands-off-Situationen (14) durch Fahrzeuge (10) entlang derselben Streckenabschnitte (26) unter Verwendung von Fahrerassistenzsystemen (12) mit einer höheren Erkennungsgüte;
- Ermittlung von Streckenabschnitten (26), auf denen eine Differenz (36) der Menge von durch die Fahrerassistenzsysteme (12) mit der ersten Erkennungsgüte erkannten Hands-off-Situation (14) und der Menge von durch die Fahrerassistenzsysteme (12) mit der höheren Erkennungsgüte erkannten Hands-off-Situationen (14) besteht; und daraus
- Erstellung der streckenbezogenen Kalibrierungsdaten (40) unter Bildung von Zuverlässigkeitskenngrößen (38) für die Erkennung mit der ersten Erkennungsgüte auf den jeweiligen Streckenabschnitten (26) in Abhängigkeit der bestehenden Differenz (36).

2. Verfahren nach Anspruch 1, **dadurch gekennzeichnet, dass** Fahrzeuge (10) verwendet werden, deren Fahrerassistenzsysteme (12) sowohl die Erkennung mit der ersten Erkennungsgüte als auch die Erkennung mit der höheren Erkennungsgüte simultan durchführen.

3. Verfahren nach einem der vorhergehenden Ansprüche, **dadurch gekennzeichnet, dass** im Fall der ersten Erkennungsgüte die Hands-off-Situationen (14) durch Auswertung von Lenkmomentdaten (30) erkannt werden und im Fall der höheren Erkennungsgüte die Hands-off-Situationen (14) durch Auswertung von Messdaten (32) eines kapazitiven Lenkradsensors (22) erkannt werden.

4. Verfahren nach einem der vorhergehenden Ansprüche, **dadurch gekennzeichnet, dass** die hergestellten streckenbezogenen Kalibrierungsdaten (40) durch die Fahrzeuge (10) oder eine zentrale Recheneinrichtung (42) an andere Fahrzeuge (44) übermittelt werden.

5. Verfahren zur Kalibrierung eines Fahrerassistenzsystems (46), das zur Erkennung von Hands-off-Situationen (14) in einem Fahrzeug (44) ausgebildet ist, umfassend folgende Schritte:
- Erfassung von Positionsdaten (34) des Fahrzeugs (44), während sich das Fahrzeug (44) entlang von Streckenabschnitten (26) bewegt; und dabei
- Erkennung von Hands-off-Situationen (14) durch das Fahrerassistenzsystem (46) mit einer ersten Erkennungsgüte,
**dadurch gekennzeichnet, dass** das Fahrzeug (44) streckenbezogene Kalibrierungsdaten (40), hergestellt oder herstellbar in einem Verfahren nach einem der vorhergehenden Ansprüche, empfängt und das Fahrerassistenzsystem (46) die Kalibrierungsdaten (40) wie folgt verwendet:
- Extraktion von Zuverlässigkeitskenngrößen (38) aus den Kalibrierungsdaten (40) zu jenen Streckenabschnitten (26), auf denen das Fahrerassistenzsystem (46) Hands-off-Situationen (14) erkannt hat; und
- Anpassung der Erkennungssensitivität des Fahrerassistenzsystems (46) für die jeweiligen Streckenabschnitte (26) in Abhängigkeit der Ausprägung der Zuverlässigkeitskenngröße (38), wenn diese einen Grenzwert unterschreitet.

6. Verfahren nach Anspruch 5, **dadurch gekennzeichnet, dass** das Fahrerassistenzsystem (46) des Fahrzeugs (44) die Hands-off-Situationen (14) durch Auswertung von Lenkmomentdaten (30) erkennt.

7. Verfahren nach Anspruch 5 oder 6, **dadurch gekennzeichnet, dass** die Erkennungssensitivität vermindert wird, indem Lenkmomentschwellwerte (50), bei denen eine Hands-off-Situation (14) erkannt wird, herabgesetzt werden.

8. Fahrerassistenzsystem (12; 46), ausgebildet um als Fahrerassistenzsystem (12; 46) mit einer ersten Erkennungsgüte und/oder als Fahrerassistenzsystem (12) mit einer höheren Erkennungsgüte in einem Verfahren nach einem der Ansprüche 1 bis 4 zu fungieren oder um als Fahrerassistenzsystem (46) mit einer ersten Erkennungsgüte in einem Verfahren nach einem der Ansprüche 5 bis 7 zu fungieren.

9. Recheneinrichtung (42), ausgebildet um in einem Verfahren nach einem der Ansprüche 1 bis 4 oder 5 bis 7 wenigstens eine Funktion aus folgender Gruppe zu übernehmen:
- Empfangen von Daten von Fahrzeugen (10) und Verarbeitung der Daten zu streckenbezogenen Kalibrierungsdaten (40);
- Empfangen von streckenbezogenen Kalibrierungsdaten (40) von Fahrzeugen (10) und Vermittlung dieser an andere Fahrzeuge (44).

10. Fahrzeug (10; 44), umfassend ein Fahrerassistenzsystem (12; 46) nach Anspruch 8.

## Claims

1. Method for generating route-related calibration data (40) for a driver assistance system (46) that is designed to detect hands-off situations (14) in a vehicle (44), comprising the following steps:
- detection of hands-off situations (14) by vehicles (10) along route sections (26) using driver assistance systems (12) with a first detection grade;
- detection of hands-off situations (14) by vehicles (10) along the same route sections (26) using driver assistance systems (12) with a higher detection grade;
- ascertainment of route sections (26) on which a difference (36) exists between the amount of hands-off situations (14) detected by the driver assistance systems (12) with the first detection grade and the amount of hands-off situations (14) detected by the driver assistance systems (12) with the higher detection grade; and, therefrom,
- generation of the route-related calibration data (40) to form reliability parameters (38) for the detection with the first detection grade on the respective route sections (26) on the basis of the difference (36) that exists.

2. Method according to Claim 1, **characterized in that** vehicles (10) are used whose driver assistance systems (12) perform both the detection with the first detection grade and the detection with the higher detection grade simultaneously.

3. Method according to either of the preceding claims, **characterized in that** in the case of the first detection grade the hands-off situations (14) are detected by evaluating steering torque data (30) and in the case of the higher detection grade the hands-off situations (14) are detected by evaluating measurement data (32) from a capacitive steering wheel sensor (22).

4. Method according to one of the preceding claims, **characterized in that** the route-related calibration data (40) produced are transmitted to other vehicles (44) by the vehicles (10) or a central computing device (42) .

5. Method for calibrating a driver assistance system (46) that is designed to detect hands-off situations (14) in a vehicle (44), comprising the following steps:
- detection of position data (34) of the vehicle (44) while the vehicle (44) moves along route sections (26); and
- detection of hands-off situations (14) by the driver assistance system (46) with a first detection grade,
**characterized in that** the vehicle (44) receives route-related calibration data (40), produced or producible in a method according to one of the preceding claims, and the driver assistance system (46) uses the calibration data (40) as follows:
- extraction of reliability parameters (38) from the calibration data (40) in relation to those route sections (26) on which the driver assistance system (46) has detected hands-off situations (14); and
- adjustment of the detection sensitivity of the driver assistance system (46) for the respective route sections (26) on the basis of the characteristic of the reliability parameter (38) if the latter is below a limit value.

6. Method according to Claim 5, **characterized in that** the driver assistance system (46) of the vehicle (44) detects the hands-off situations (14) by evaluating steering torque data (30).

7. Method according to Claim 5 or 6, **characterized in that** the detection sensitivity is reduced by lowering steering torque threshold values (50) for which a hands-off situation (14) is detected.

8. Driver assistance system (12; 46), designed to function as a driver assistance system (12; 46) with a first detection grade and/or as a driver assistance system (12) with a higher detection grade in a method according to one of Claims 1 to 4 or to function as a driver assistance system (46) with a first detection grade in a method according to one of Claims 5 to 7.

9. Computing device (42), designed to perform at least one function from the following group in a method according to one of Claims 1 to 4 or 5 to 7:
- reception of data from vehicles (10) and processing of the data to obtain route-related calibration data (40);
- reception of route-related calibration data (40) from vehicles (10) and conveyance of said data to other vehicles (44).

10. Vehicle (10; 44), comprising a driver assistance system (12; 46) according to Claim 8.

## Revendications

1. Procédé permettant de créer des données d'étalonnage liées au trajet (40) pour un système d'assistance au conducteur (46) qui est réalisé pour reconnaître des situations de perte de contrôle (14) dans un véhicule (44), comprenant les étapes suivantes consistant à :
- reconnaître des situations de perte de contrôle (14) par des véhicules (10) le long de tronçons de trajet (26) en utilisant des systèmes d'assistance au conducteur (12) avec une première qualité de reconnaissance ;
- reconnaître des situations de perte de contrôle (14) par des véhicules (10) le long des mêmes tronçons de trajet (26) en utilisant des systèmes d'assistance au conducteur (12) avec une qualité de reconnaissance supérieure ;
- déterminer des tronçons de trajet (26) sur lesquels il existe une différence (36) entre la quantité de situations de perte de contrôle (14) reconnues par les systèmes d'assistance au conducteur (12) avec la première qualité de reconnaissance et la quantité de situations de perte de contrôle (14) reconnues par les systèmes d'assistance au conducteur (12) avec la qualité de reconnaissance supérieure ; et sur cette base
- créer les données d'étalonnage liées au trajet (40) en formant des grandeurs caractéristiques de fiabilité (38) pour la reconnaissance avec la première qualité de reconnaissance sur les tronçons de trajet (26) respectifs en fonction de la différence (36) existante.

2. Procédé selon la revendication 1, **caractérisé en ce que** des véhicules (10) sont utilisés dont les systèmes d'assistance au conducteur (12) effectuent simultanément à la fois la reconnaissance avec la première qualité de reconnaissance et la reconnaissance avec la qualité de reconnaissance supérieure.

3. Procédé selon l'une quelconque des revendications précédentes, **caractérisé en ce que** dans le cas de la première qualité de reconnaissance, les situations de perte de contrôle (14) sont reconnues par l'évaluation de données de couple de braquage (30), et dans le cas de la qualité de reconnaissance supérieure, les situations de perte de contrôle (14) sont reconnues par l'évaluation de données de mesure (32) d'un capteur de volant capacitif (22).

4. Procédé selon l'une quelconque des revendications précédentes, **caractérisé en ce que** les données d'étalonnage liées au trajet (40) créées sont transmises par les véhicules (10) ou un dispositif informatique central (42) à d'autres véhicules (44).

5. Procédé permettant d'étalonner un système d'assistance au conducteur (46) qui est réalisé pour reconnaître des situations de perte de contrôle (14) dans un véhicule (44), comprenant les étapes suivantes consistant à :
- détecter des données de position (34) du véhicule (44) pendant que le véhicule (44) se déplace le long de tronçons de trajet (26) ; et en même temps
- reconnaître des situations de perte de contrôle (14) par le système d'assistance au conducteur (46) avec une première qualité de reconnaissance,
**caractérisé en ce que** le véhicule (44) reçoit des données d'étalonnage liées au trajet (40), créées ou pouvant être créées dans un procédé selon l'une quelconque des revendications précédentes, et le système d'assistance au conducteur (46) utilise les données d'étalonnage (40) comme suit :
- extraction de grandeurs caractéristiques de fiabilité (38) à partir des données d'étalonnage (40) pour les tronçons de trajet (26) sur lesquels le système d'assistance au conducteur (46) a reconnu des situations de perte de contrôle (14) ; et
- adaptation de la sensibilité de reconnaissance du système d'assistance au conducteur (46) pour les tronçons de trajet (26) respectifs en fonction de la catégorie de la grandeur caractéristique de fiabilité (38) si celle-ci est inférieure à une valeur limite.

6. Procédé selon la revendication 5, **caractérisé en ce que** le système d'assistance au conducteur (46) du véhicule (44) reconnaît les situations de perte de contrôle (14) par l'évaluation de données de couple de braquage (30).

7. Procédé selon la revendication 5 ou 6, **caractérisé en ce que** la sensibilité de reconnaissance est diminuée en abaissant des valeurs seuil de couple de braquage (50) auxquelles une situation de perte de contrôle (14) est reconnue.

8. Système d'assistance au conducteur (12 ; 46), réalisé pour servir de système d'assistance au conducteur (12 ; 46) avec une première qualité de reconnaissance et/ou de système d'assistance au conducteur (12) avec une qualité de reconnaissance supérieure dans un procédé selon l'une quelconque des revendications 1 à 4 ou pour servir de système d'assistance au conducteur (46) avec une première qualité de reconnaissance dans un procédé selon l'une quelconque des revendications 5 à 7.

9. Dispositif informatique (42), réalisé pour prendre en charge dans un procédé selon l'une quelconque des revendications 1 à 4 ou 5 à 7 au moins une fonction issue du groupe suivant :
- recevoir des données provenant de véhicules (10) et traiter les données en données d'étalonnage liées au trajet (40) ;
- recevoir des données d'étalonnage liées au trajet (40) de certains véhicules (10) et les transmettre à d'autres véhicules (44).

10. Véhicule (10 ; 44), comprenant un système d'assistance au conducteur (12 ; 46) selon la revendication 8.
